Europäisches Patentamt

European Patent Office

Office européen des brevets

(11) Publication number: 0 243 077
A2

# (12) EUROPEAN PATENT APPLICATION

(21) Application number: 87303288.2

(51) Int. Cl.⁴: H 05 B 3/14

(22) Date of filing: 14.04.87

(30) Priority: 17.04.86 US 853063  30.01.87 US 9562

(43) Date of publication of application:
28.10.87 Bulletin 87/44

(84) Designated Contracting States:
BE CH DE FR GB LI NL SE

(71) Applicant: FORD MOTOR COMPANY LIMITED
Eagle Way
Brentwood Essex CM13 3BW (GB)

(84) Designated Contracting States: GB

(71) Applicant: FORD-WERKE AKTIENGESELLSCHAFT
Werk Köln-Niehl Henry-Ford-Strasse Postfach 60 40 02
D-5000 Köln 60 (DE)

(84) Designated Contracting States: DE

(71) Applicant: FORD FRANCE SOCIETE ANONYME
344 Avenue Napoléon Bonaparte B.P. 307
F-92506 Rueil Malmaison Cedex (FR)

(84) Designated Contracting States: FR

(71) Applicant: Ford Motor Company
The American Road
Dearborn, MI 48121 (US)

(84) Designated Contracting States: BE CH LI NL SE

(72) Inventor: Padgaonkar, Arvind Jiwajee
6721 Rockdale
Dearborn Heights Michigan 18127 (US)

(74) Representative: Messulam, Alec Moses et al
A. Messulam & Co. 24 Broadway
Leigh on Sea Essex SS9 1BN (GB)

(54) An automotive type electric heater.

(57) A quick warm-up heat exchanger for use in the air duct (10) of a motor vehicle, consisting of pairs of spaced outer and inner heat conducting plates (12,14) separated by and joined to thin sheet metal corrugated and louvered finned secondary heat transfer members (16), and a central primary heat core sandwiched between the inner plates, the core including PTC (positive temperature coefficient) electrical heater elements (25) that are self-regulating in output temperature level and connected through the inner plates (14) to the vehicle electrical system so that when energized, upon turning on of the vehicle ignition system, a primary source of heat is quickly transferred to the inner plates (14) and therefrom to the large surface area of the louvered finned members (16) for secondary heat transfer to the duct air passing through the pockets (20) formed in the corrugated members and the slanted louvered openings (23) in the finned members (16).

FIG.1

EP 0 243 077 A2

**Description**

## AN AUTOMOTIVE TYPE ELECTRIC HEATER

This invention relates to an automotive type electric heater.

The use of PTCs as heater elements per se is a well-known expedient. It is a characteristic of a PTC heater that its internal resistance varies directly with the skin temperature of the element, from a predetermined switch point. The change in the internal resistance, however, it not a linear function of the element's internal temperature. When the PTC heater is electrically energized, the joule heat causes rapid self-heating of the PTC element. The heater resistance remains almost constant as it heats from room temperature. It increases as the PTC temperature nears the switching temperature, or desired upper limit, at which point the resistance increases sharply.That is, a very high impedance to current flow is obtained at high internal temperatures. The PTC has the ability to maintain a high maximum temperature and, therefore, there is no need for a cut-off thermostat.

With the above characteristics, therefore, the PTC heater element provides a convenient heater source that is self-limiting in output temperature and rapidly provides heat when energized.

PTC heater elements have been used widely for such things as food warming trays, for radiator constructions, and other uses. For example, Hofer et al, U.S. 4,352,008, shows the use of a PTC element in combination with radiator fins for the transfer of heat by convection to the air surrounding the radiator.

Nauerth, U.S. 4,327,82, Pirotte, U.S. 4,147,927, and Vann Bokestal et al, U.S. 4,104,509, all disclose electrical resistance type heating elements having a PTC at their center.

Habata et al, U.S. 4,482,801, Roller et al, U.S. 4,331,860, and Meixner, U.S. 4,331,861, also describe the use of PTC elements as heaters.

None of the above references, however, mention the use of the PTC heater as a primary heat exchange source, and thin sheet metal fins that are per se louvered for effective secondary surface heat exchange.

Brzuszek et al, U.S. 3,742,192, shows a heater consisting of a rod with laterally extending spaced fins for transfer of heat to the air circulating between the fins, such as in a space heater for heated dwellings. The heater element, however, is not a PTC and the current, therefore, must be manually regulated. Also, there is no suggestion of the use of corrugated and louvered fins for effective secondary heat exchange supplemental to the use of a PTC heater for primary heat exchange.

Horsma, U.S. 4,314,145 and U.S. 4,246,468, and Leary et al, U.S. 4,425,497, illustrate the use of PTC elements surrounded by insulation to protect against the loss of heat.

Real, U.S. 4,501,321, shows a charge air cooler consisting of a number of enclosed corrugated heat exchange fins defining air or fluid openings. No PTC heater element is shown or described in connection with this device, nor are the fins per se louvered for air turbulence and greater heat transfer surface area.

GB 2 076 270 A, Oshima et al, shows an air heating device with spaced metal heat radiating surfaces projecting from opposite sides of flat PTC heating elements. No secondary heat radiating fins that are arranged in a corrugated manner and also louvered are provided for developing turbulence to the air and an increased heat transfer surface area.

Seisakusho et al, Japanese Patent 54-115440 shows a corrugated PTC resistor element enclosed by plates having holes for air exit; however, the corrugated PTCs are not themselves louvered for producing turbulence to the air flow and increased heat transfer surface area.

It is, therefore, a primary object of the invention to provide a quick warm-up type electrical heater that is relatively simple in construction and inexpensive to manufacture and yet one that makes use of primary and secondary heat transfer surfaces for the exchange of heat to air in the heater duct of an automotive type vehicle to warm the same quickly and efficiently.

The invention will now be described further by way of example with reference to the accompanying drawings in which:-

Figure 1 is a perspective view of a heat exchanger embodying the invention installed in the heat duct of a motor vehicle;

Figure 2 is an enlarged cross-sectional view of the heat exchanger per se embodying the invention; and

Figure 3 is a prospective view of a portion of the heat exchanger shown in Figure 2.

As stated previously, the invention is for use in an automotive type installation, preferably in the air duct outlet to the passenger compartment. The heat exchanger as shown is of a box-like structure positioned crosswise in the duct 10 so that all of the air passing through the duct must flow through the heater element.

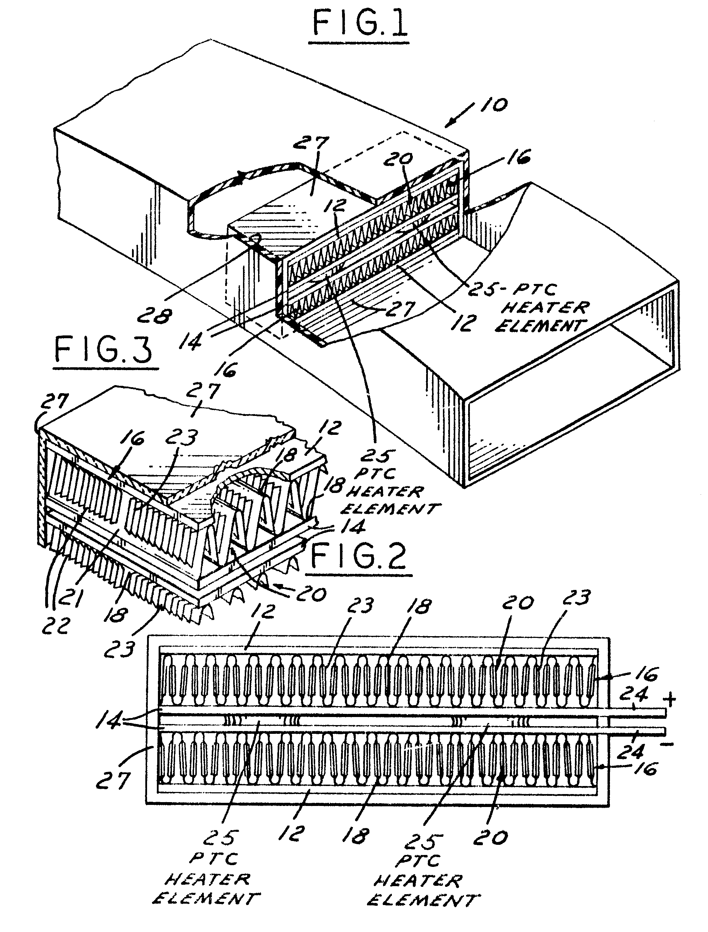

More specifically, the heat exchanger is defined by a pair of spaced parallel outer metal plates 12 spaced from a a pair of inner parallel spaced plates 14 by a laterally extending finned member 16. The fins in this case are defined by a laterally corrugated thin piece of sheet metal having the apices 18 of the fins soldered to the outer and inner plates 12 and 14 to which it is connected. This thereby defines contiguous cellular-like openings 20 that extend parallel to the air flow for passage of the duct air therethrough to be warmed in a manner to be described. Additionally, as seen both in Figures 2 and 3, each of the metal fin walls 21 defining a side of the cellular openings 20 is itself formed with a multitude of louvers 22 defining slanted air flow turbulence openings 23 through which the air flows at an angle. As shown, the louvers are slanted at an angle of approximately 45° to the axis of the cellular opening, with half of the louvers angled in one direction, the remaining half in the other, with a straight partition between. This construction provides two advantages. It not only increases the surface area for greater secondary heat transfer by the air passing over both sides of the louvers, but also creates turbulent flow of the air streams by the flow through one side colliding with that from the other side of the cellular opening, for further increased heat transfer.

Connecting the inner plates 14 and sandwiched between to define a primary heat core structure are a number of spaced positive temperature coefficient (PTC) disc-like electrical heater elements or pills 25, the characteristics of which have been described previously. Electrical power to the PTC elements is provided through the inner parallel plates 14 by means of electrical connections 24, as shown.

Completing the construction, a sheet of insulating material 27 is wrapped circumferentially around the heat exchanger between outer plates 12 and the inner wall 28 defining the opening of duct 10, to provide the most effective heat exchange between the PTC elements and fins and the incoming air in the duct.

The operation is believed to be clear from the above and a consideration of the drawings. However, in brief, the electrical contacts would be connected to the vehicle electrical system so as to be operative as soon as the vehicle electrical system is turned on. Therefore, upon the application of electrical power, the PTC elements will immediately heat internally and quickly pass this source of primary heat to the inner parallel plates 14. The rapid warming of these plates will then quickly be transferred to the large or lengthy surface area of the louvered fins of the thin corrugated member 16. There then is a secondary heat exchange with the air contacting the large surface area of the fins as it passes through not only each opening 20 but also through the louvers 22 with the air streams colliding to provide warm-up of the air at a fast rate.

From the foregoing, it will be seen that there is provided a combination of a quick warm-up of a primary surface of the heat exchanger by the use of PTC heater elements, and an effective secondary heat exchange through the use of a corrugated heat exchange member, the fins of which are also louvered for the passage of air sidewise therethrough at an angle to provide a large heat transfer surface area as well as turbulent flow to transfer heat at a fast rate.

While the invention has been shown and described in its preferred embodiment, it will be clear to those skilled in the arts to which it pertains that many changes and modifications may be made thereto without departing from the scope of the invention. For example, while the invention has been described and shown as a heat exchanger of a box-like construction, it will be clear that the shape could be modified for use in a circular duct to conform to the geometric figure of the duct. Further, if it were desired to install the heat exchanger in the large air handling case of the vehicle, several of the units could be grouped together to provide the proper size and heat output. It will also be seen that a single longitudinally extending PTC element could be used in place of several spaced disc like PTC elements, without departing from the scope of the invention.

## Claims

1. An automotive type electric heater for use in the heater air duct of a vehicle comprising a heat exchanger adapted to be positioned crosswise in an air duct (10) for the flow of the air therethrough, the exchanger having spaced pairs of outer and inner substantially parallel heat conducting plates (12,14), thin corrugated metal sheet type finned members (16) secured at their outer and inner edges respectively to the outer and inner plates (12,14) of each pair providing a lengthy surface area for the secondary exchange of heat therefrom and defining contiguous cellular-like air pockets (20) between the plates for the flow of duct air through the pockets, each of the finned members (16) being louvered for the width of the pockets to provide slanted openings (23) for the passage of air therethrough from the cellular pockets (20), the air streams flowing through opposite sides of the cellular pocket (20) colliding with one another to provide turbulence and faster heat transfer from the metal finned members (16), and a primary heat core structure consisting of self limiting output temperture electric heater means (25) sandwiched between and connected to the inner plates (14) to quickly heat the same when electrically energized, the heat being transferred therefrom to the large surface area of the louvered finned members (16) for exchange with the duct air to warm the same passing through the pockets.

2. A heater as claimed in Claim 1, including insulation means circumferentially enclosing the heat exchanger.

3. A heater as claimed in Claim 1 or 2, wherein the heater means includes a positive temperature coefficient self output temperature regulating element, the finned member louvers being slanted in different directions over the width of each finned member to collide air flow streams flowing through the louvered openings.

4. An electric heater for use in the air duct of a motor vehicle heater system comprising a heat exchanger adapted to be positioned crosswise in the duct (10) and having spaced outer and inner laterally extending heat conducting plates (12,14) a thin sheet metal laterally corrugated louvered member connecting the plates defining heat transfer fins (16) forming longitudinal cellular air pockets (20) for the passage of duct air therethrough, each of the finned members (16) being louvered over the extent of the pockets to provide slanted openings (23) for the passage of air therethrough from the cellular pockets (20), the air streams flowing through opposite sides of the cellular pockets (20) colliding with the one another to provide turbulence and faster heat transfer from the

finned members (16), and an electric PTC (positive temperture coefficient) self output temperature limiting heater element (25) secured to the inner plate (14) inwardly thereof, the operability of the heter element (25) quickly providing a primary source of heat to the inner plate (14) up to the output temperature limit of the PTC element (25) for transfer of heat therefrom to the large surface area of the finned members (16) for secondary heat exchange with the air passing thereagainst through the pockets (20) and through the slanted louver openings (23).

5. An electric heater as claimed in Claim 4, including insulation wrapped around the heat exchanger.

0243077

# FIG.1

# FIG.3

# FIG.2